# EUROPÄISCHE PATENTSCHRIFT

(11) **EP 4 516 570 B1**
(45) Veröffentlichungstag und Bekanntmachung des Hinweises auf die Patenterteilung: **11.11.2026**
(21) Anmeldenummer: 24193168.2
(22) Anmeldetag: 06.08.2024
(51) Int. Cl.: B60L 50/60, B60L 53/80, H01M 10/42, H01M 50/249, B60K 1/04, B60K 7/00, H02J 7/14, H01M 10/613

(54) **RADNABENANTRIEBSANORDNUNG**
WHEEL HUB DRIVE ARRANGEMENT
ENSEMBLE D'ENTRAÎNEMENT DE MOYEU DE ROUE

(30) Priorität: 22.08.2023 DE 102023122376
(43) Veröffentlichungstag der Anmeldung: 05.03.2025
(73) Patentinhaber: AAT Alber Antriebstechnik GmbH, 72458 Albstadt (DE)
(72) Erfinder: Gonser, Michael, 72461 Albstadt (DE); Blatter, Benjamin, 72461 Albstadt (DE); Schwarz, Andreas, 88094 Oberteuringen (DE)
(74) Vertreter: Kohler Schmid Möbus Patentanwälte

(56) Entgegenhaltungen:
- DE-T2- 69 515 746
- US-A1- 2012 168 239
- US-A1- 2019 112 002

## Beschreibung

Die Erfindung betrifft eine Radnabenantriebsanordnung für ein Rad, insbesondere ein Rollstuhlrad, mit einem Radnabenantrieb und einem dem Radnabenantrieb zugeordneten Akku, der zumindest teilweise umfangsmäßig um den Radnabenantrieb angeordnet ist, wobei eine erste Aufnahme zum Aufnehmen des Akkus vorgesehen ist, wobei im Bereich der ersten Aufnahme eine Schnittstelle zur zumindest elektrischen Verbindung des Akkus mit dem Radnabenantrieb vorgesehen ist und wobei eine zweite Aufnahme zur wahlweisen Aufnahme eines weiteren Akkus, eines Platzhalters oder eines Staufachs vorgesehen ist.

Rollstühle mit einem Radnabenantrieb sind grundsätzlich bekannt. Die Leistungsversorgung dieser Radnabenantriebe erfolgt über einen Akku. Dabei ist es bekannt, den Akku am Rollstuhl selbst, d. h. am Rollstuhlgestell, anzuordnen. In diesem Fall besteht die Anforderung, eine elektrische Verbindung vom Akku zum Radnabenantrieb herzustellen. Derartige am Rollstuhl selbst angeordnete Akkus sind häufig entnehmbar.

Weiterhin sind Radnabenantriebe für Rollstühle bekannt, bei denen der Akku im Bereich des Radnabenantriebs selbst angeordnet ist. Dabei ist der Akku in den Radnabenantrieb integriert, was zu erhöhter Wärmeentwicklung führen kann. Derartige Akkus sind nicht entnehmbar.

US 2012/0168239 A1 beschreibt einen Radnabenantrieb, wobei Akkus in einem Gehäuse um den Radnabenantrieb herum angeordnet sein können.

DE 695 15 746 T2 beschreibt eine Radnabenantriebsanordnung, insbesondere für ein Rollstuhlrad. Batterien eines Radnabenantriebs können insbesondere an diametral entgegengesetzten Stellen auf einem zur Achse eines Rollstuhlrads konzentrischen Kreis angeordnet sein.

US 2019/0112002 A1 offenbart eine Radnabenantriebsanordnung, die unter den Wortlaut des Oberbegriffs des Anspruchs 1 fällt, und beschreibt insbesondere eine Radnabenantriebsanordnung für ein Fahrrad. Die Versorgung des entsprechenden Radnabenantriebs mit elektrischer Energie erfolgt über zwei teilweise umfangsmäßig in einer jeweiligen Aufnahme um den Radnabenantrieb herum angeordnete Akkus.

Aufgabe der vorliegenden Erfindung ist es, eine Radnabenantriebsordnung bereitzustellen, die insbesondere zur Verwendung bei Rollstühlen vorgesehen ist, und die einen hohen Bedienkomfort bietet.

Gelöst wird diese Aufgabe erfindungsgemäß durch eine Radnabenantriebsanordnung für ein Rad, insbesondere ein Rollstuhlrad, mit einem Radnabenantrieb und einem dem Radnabenantrieb zugeordneten Akku, wobei eine erste Aufnahme zum Aufnehmen des Akkus vorgesehen ist, wobei im Bereich der ersten Aufnahme eine Schnittstelle zur zumindest elektrischen Verbindung des Akkus mit dem Radnabenantrieb vorgesehen ist und wobei eine zweite Aufnahme zur wahlweisen Aufnahme eines Akkus, eines Platzhalters oder eines Staufachs vorgesehen ist, wobei die zweite Aufnahme ohne Schnittstelle ausgebildet ist. Es ist vorgesehen, dass der Akku nicht in den Radnabenantrieb integriert ist, sondern zumindest in einem Abschnitt um den Radnabenantrieb herum angeordnet ist. Dies hat den Vorteil, dass hinsichtlich der Baugröße für den Akku weniger Einschränkungen bestehen. Somit können größere Akkus verbaut werden als dies bisher der Fall ist. Außerdem kann die Wärme von einem Akku, der um einen Radnabenantrieb herum angeordnet ist, leichter abgeführt werden als bei einem Akku, der in einen Radnabenantrieb integriert ist. Sowohl die größere Ausgestaltung des Akkus als auch die bessere Kühlmöglichkeit führen dazu, dass die Reichweite eines Rollstuhls, der mit der erfindungsgemäßen Radnabenantriebsanordnung ausgerüstet ist, erhöht werden kann.

Weitere Vorteile ergeben sich, wenn der Akku entnehmbar ist. Der Akku ist demnach nicht fest in der Radnabenantriebsanordnung verbaut. Der Akku kann an der Radnabenantriebsanordnung lösbar verrastbar und/oder verriegelbar sein. Dabei kann vorgesehen sein, dass beim Lösen der Verriegelung bzw. beim Entriegeln der Akku etwas herausspringt, sodass er leicht entnommen werden kann. Insbesondere kann der Akku werkzeuglos entnommen werden. Weiterhin ist vorteilhaft, wenn der Akku entnommen werden kann, ohne dass das Rad, an dem die Radnabenantriebsanordnung verbaut ist, vom Fahrzeug, an dem das Rad angeordnet ist, gelöst werden muss. Somit ist es beispielsweise möglich, dass ein Rollstuhl in der Garage oder im Hauseingang stehen bleibt und lediglich der Akku zum Laden entnommen werden muss. Ein möglicherweise verschmutzter Rollstuhl muss somit nicht zum Laden in die Wohnräume gefahren werden. Insbesondere, wenn ein Benutzer einen Rollstuhl mit Radnabenantrieb hat, der ausschließlich im Freien verwendet wird und einen weiteren Hausrollstuhl zur Verwendung in den Wohnräumen besitzt, bietet die erfindungsgemäße Lösung große Vorteile.

Gemäß einem Aspekt der Erfindung kann vorgesehen sein, dass der Akku, insbesondere dessen Akkugehäuse, C-förmig ausgebildet ist. Ein Radnabenantrieb bzw. dessen Gehäuse, ist häufig kreisrund ausgebildet. Wenn demnach der Akku im Wesentlichen C-förmig ausgebildet ist, kann dieser besonders einfach umfangsmäßig um den Radnabenantrieb herum angeordnet werden. Dabei kann vorgesehen werden, dass der C-förmige Akku den Radnabenantrieb etwa zur Hälfte umgibt.

Der Akku kann als Akkupack mit mehreren Akkuzellen ausgebildet sein, wobei die Akkuzellen im Akkugehäuse parallel zur Radachse des Rads, an dem die Radnabenantriebsanordnung montiert ist, ausgerichtet sind. Auf diese Art und Weise lässt sich ein besonders kompakter Akku mit einer hohen Leistung bzw. Kapazität ausbilden.

Die Schnittstelle der ersten Aufnahme kann beispielsweise als Steckkontakt ausgebildet sein. Die erste Aufnahme kann Teil eines Gehäuses sein, welches um den Radnabenantrieb herum vorgesehen ist. In der Aufnahme kann der Akku geschützt angeordnet werden. Die Schnittstelle kann in der ersten Aufnahme angeordnet sein

Am oder im Akku kann ein Batteriemanagementsystem angeordnet sein, das über die oder eine weitere Schnittstelle mit der Elektronik des Radnabenantriebs kommuniziert. Wenn das Batteriemanagementsystem im Akku angeordnet ist, ergibt sich eine besonders kompakte Ausgestaltung der Radnabenantriebsanordnung.

Die Schnittstelle kann dazu ausgebildet sein, sowohl eine elektrische Verbindung zum Radnabenantrieb als auch eine Datenverbindung zum Radnabenantrieb, insbesondere zur Leistungselektronik, herzustellen.

Erfindungsgemäß weist die Radnabenantriebsanordnung eine zweite Aufnahme auf. Wenn in der zweiten Aufnahme ein weiterer Akku angeordnet ist, so kann die Reichweite des Rollstuhls, an dem der Radnabenantrieb verbaut ist, weiter erhöht werden. Wenn der Ladezustand des in der ersten Aufnahme angeordneten Akkus zur Neige geht, kann dieser gegen den in der zweiten Aufnahme angeordneten Akku getauscht werden. Wird lediglich ein Akku mitgeführt, der in der ersten Aufnahme angeordnet ist, so kann die zweite Aufnahme durch ein Platzhalter-Gehäuse abgedeckt werden, um eine Verschmutzung zu vermeiden. Alternativ kann in der zweiten Aufnahme ein Staufach angeordnet werden, in dem beispielsweise Zubehörteile, wie z. B. ein Ladekabel für den Akku, transportiert werden können.

Die zweite Aufnahme ist ohne Schnittstelle ausgebildet. Es ist insbesondere vorgesehen, dass ein in der zweiten Aufnahme angeordneter Akku nicht mit dem Radnabenantrieb elektrisch verbunden werden kann. Dadurch vereinfacht sich der Aufbau der Radnabenantriebsanordnung.

An dem Akku kann eine Ladeschnittstelle zum Laden eines Bediengeräts eines Fahrzeugs, an dem die Radnabenantriebsanordnung anordenbar ist, vorgesehen sein. Die Ladeschnittstelle kann beispielsweise als Ladebuchse ausgebildet sein. So kann der Akku quasi als Powerbank für das Bediengerät oder auch ein Handy oder dgl. verwendet werden.

Der Akku weist ein Batteriemanagementsystem auf und kann daher auch im entnommenen Zustand als Powerbank dienen. Es versteht sich, dass an dem Akku eine weitere Schnittstelle vorgesehen sein kann, um den Akku selbst an eine Stromversorgung anzuschließen und aufzuladen.

Der Akku kann eine Kühleinrichtung aufweisen. Insbesondere können an dem Akku als Kühleinrichtung Kühlrippen vorgesehen sein, um die Oberfläche zur Wärmeabfuhr zu vergrößern. Gegebenenfalls kann über diese Kühleinrichtung auch noch Wärme abgeführt werden, die durch den Radnabenantrieb selbst erzeugt wird.

Gemäß einer Ausgestaltung der Erfindung kann ein den Radnabenantrieb umgebendes Gehäuse oder Gehäuseabschnitt vorgesehen sein, das oder der Verstärkungen aufweist. Die Verstärkungen können als radiale Verstärkungsrippen ausgebildet sein. An dem Gehäuse können Speichen eines Rads, welches die Radnabenantriebsanordnung aufweist, angreifen. Der Akku kann Aussparungen aufweisen, sodass die radialen Verstärkungsrippen bei eingesetztem Akku in den Aussparungen angeordnet sind.

Die erste Aufnahme und der Akku können korrespondierende Führungselemente aufweisen. Beispielsweise kann an der ersten Aufnahme eine im Querschnitt T-förmige Führung vorgesehen sein, die mit einer entsprechenden Führung am Akku zusammenwirkt. Durch diese Maßnahme kann der Akku zuverlässig zu der Schnittstelle geführt werden. Auch die zweite Aufnahme kann eine der Führung der ersten Aufnahme entsprechende Führung aufweisen.

In den Rahmen der Erfindung fällt außerdem ein Rad, insbesondere ein Rollstuhlrad, mit einer erfindungsgemäßen Radnabenantriebsanordnung.

Weiterhin fällt in den Rahmen der Erfindung ein Rollstuhl mit einem erfindungsgemäßen Rad, wobei ein Bediengerät vorgesehen ist, welches kabellos mit dem Radnabenantrieb kommuniziert. Insbesondere kann das Bediengerät über Bluetooth mit dem Radnabenantrieb verbunden sein. Eine Verkabelung des Rollstuhls kann dadurch entfallen.

Das Bediengerät kann somit auch problemlos mit einem anderen Antrieb oder Rollstuhl gekoppelt und damit verwendet werden.

Der Rollstuhl kann als Selbstfahrerrollstuhl ausgebildet sein und das Bediengerät kann eine Lenkeinrichtung zum Lenken des Rollstuhls aufweisen. Beispielsweise kann das Bediengerät zu diesem Zweck einen Joystick aufweisen.

Weitere Merkmale und Vorteile der Erfindung ergeben sich aus der nachfolgenden detaillierten Beschreibung von Ausführungsbeispielen der Erfindung anhand der Figuren der Zeichnung, die erfindungswesentliche Einzelheiten zeigt, sowie aus den Ansprüchen. Die dort gezeigten Merkmale sind nicht notwendig maßstäblich zu verstehen und derart dargestellt, dass die erfindungsgemäßen Besonderheiten deutlich sichtbar gemacht werden können.

In der schematischen Zeichnung sind Ausführungsbeispiele der Erfindung in verschiedenen Stadien der Benutzung dargestellt und in der nachfolgenden Beschreibung näher erläutert.

Es zeigen:
- Fig. 1: eine Seitenansicht auf ein Rad mit einem Radnabenantrieb;
- Fig. 2: eine perspektivische Ansicht einer Radnabenantriebsanordnung;
- Fig. 3: eine perspektivische Ansicht einer Radnabenantriebsanordnung mit eingesetztem Akku;
- Fig. 4: eine Radnabenantriebsanordnung mit zwei eingesetzten Akkus;
- Fig. 5: eine perspektivische Ansicht eines Akkus;
- Fig. 6: eine Draufsicht auf einen Akku mit teilweise ausgeblendeter Gehäusewand;
- Fig. 7: ein an die Radnabenantriebsanordnung angeschlossenes Bediengerät.

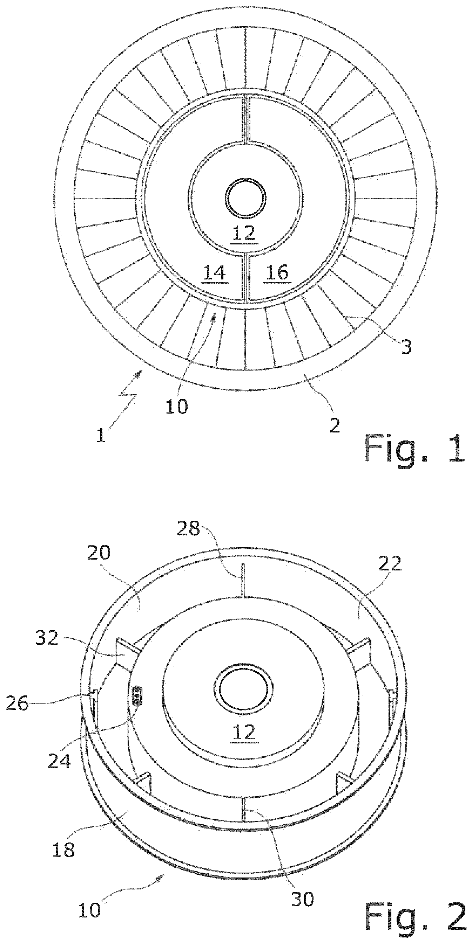

Die Fig. 1 zeigt ein Rad 1, insbesondere ein Rollstuhlrad. Das Rad 1 umfasst einen Reifen 2, der über Speichen 3 an eine Radnabenantriebsanordnung 10 angeschlossen ist. Die Radnabenantriebsanordnung 10 weist einen Radnabenantrieb 12 sowie einen Akku 14 zur Leistungsversorgung des Radnabenantriebs 12 auf. Der Akku 14 ist zur Hälfte umfangsmäßig um den Radnabenantrieb 12 angeordnet. Insbesondere ist der Akku 14 bzw. dessen Gehäuse im Wesentlichen C-förmig ausgebildet. Weiterhin ist ein Platzhalter 16 zu erkennen, dessen Größe und Form der des Akkus 14 entsprechen.

Die Fig. 2 zeigt eine perspektivische Darstellung der Radnabenantriebsanordnung 10. Insbesondere ist zu erkennen, dass der Radnabenantrieb 12 von einem Gehäuse 18 bzw. Gehäuseabschnitt umgeben ist. Das Gehäuse 18 weist eine erste Aufnahme 20 und eine zweite Aufnahme 22 auf. In der ersten Aufnahme 20 kann der Akku 14 angeordnet werden. Der Akku 14 wird über eine als Stecker ausgebildete Schnittstelle 24 beim Einführen mit dem Radnabenantrieb 12 automatisch verbunden. Um den Akku 14 beim Einführen zu führen, ist ein Führungselement 26, das hier im Querschnitt T-förmig ausgebildet ist, in der ersten Aufnahme 20, insbesondere an einer Wandung des Gehäuses 18 vorgesehen.

Die erste und zweite Aufnahme 20, 22 sind durch radial ausgerichtete Wandungen 28, 30 voneinander getrennt.

In der ersten und zweiten Aufnahme 20, 22 bzw. im Gehäuse 18 sind Verstärkungen 32 vorgesehen, die hier als radial ausgerichtete Stege ausgebildet sind. Dadurch wird die notwendige Stabilität erreicht, wenn die Speichen mit dem Gehäuse 18 verbunden sind.

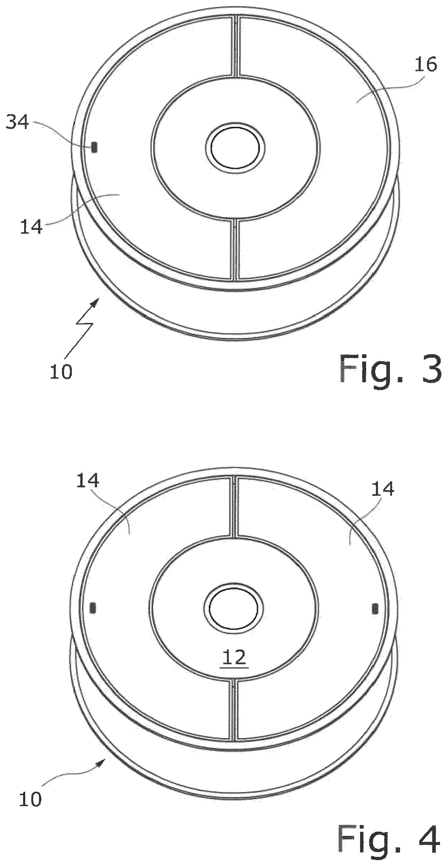

Die Fig. 3 zeigt die Radnabenantriebsanordnung 10 mit in die erste Aufnahme 20 eingesetztem Akku 14 und in die zweite Aufnahme 22 eingesetztem Platzhalter 16. Als Alternative zum Platzhalter 16 könnte auch ein Staufach eingesetzt werden, in dem beispielsweise ein Ladekabel für den Akku 14 aufbewahrt wird. Die Form und Größe des Staufachs können der des Akkus 14 entsprechen. Weiterhin ist zu erkennen, dass am Akku 14 eine weitere Schnittstelle 34, insbesondere eine Ladebuchse, vorgesehen ist, an die ein Ladekabel eines Bediengeräts angeschlossen werden kann.

Der Fig. 4 kann man entnehmen, dass anstelle des Platzhalters 16 ein weiterer Akku 14 in der zweiten Aufnahme 22 angeordnet werden kann. Der Akku 14 in der zweiten Aufnahme 22 ist jedoch nicht elektrisch mit dem Radnabenantrieb 12 verbunden. Die Anordnung in der zweiten Aufnahme 22 dient lediglich dem Transport des weiteren Akkus 14. Wenn der in der ersten Aufnahme 20 angeordnete Akku leer ist, kann dieser entnommen und durch den in der zweiten Aufnahme 22 angeordneten Akku ersetzt werden. Der leere Akku kann dann in die zweite Aufnahme 22 eingesetzt werden. Die zweite Aufnahme 22 weist keine Schnittstelle zur Verbindung eines Akkus auf. Der Akku 14 kann in der ersten Aufnahme 20 verrastet und/oder verriegelt werden. Gleiches ist für die zweite Aufnahme 22 denkbar. Auch der Platzhalter 16 kann dort verriegelt werden, um zu verhindern, dass dieser sich während des Betriebs des Radnabenantriebs 12 von der Radnabenantriebsanordnung 10 löst.

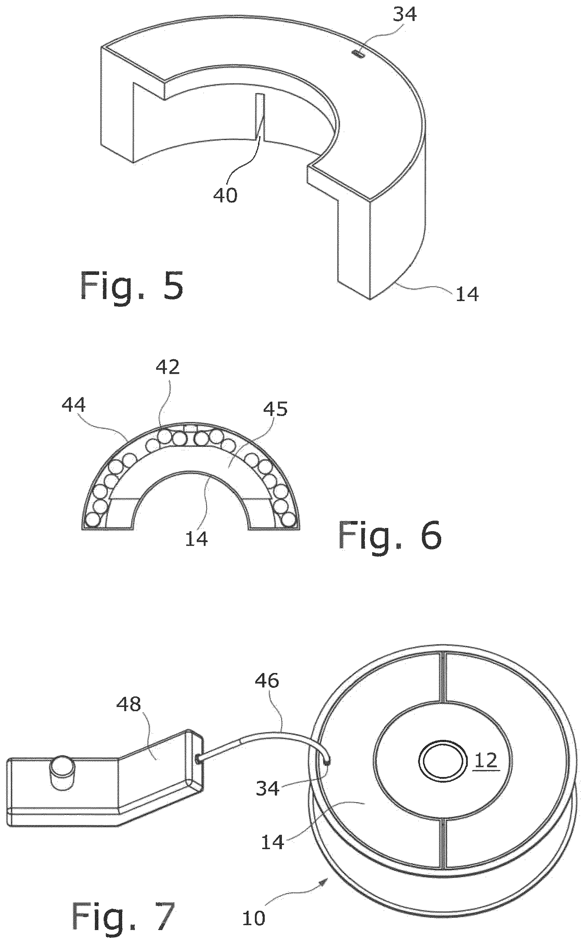

Die Fig. 5 zeigt eine perspektivische Ansicht des Akkus 14. Zum einen ist die C-Form des Akkus 14 zu erkennen. Zum anderen ist zu erkennen, dass Aussparungen 40 vorgesehen sind, sodass in den Aussparungen 40 bei eingesetztem Akku 14 die Verstärkungen 32 angeordnet werden können. Im gezeigten Ausführungsbeispiel ist der Akku 14 im Schnitt L-förmig ausgestaltet. Diese Ausgestaltung ist jedoch nicht zwingend. Andere Ausgestaltungen sind ebenfalls denkbar. Wesentlich ist, dass der Akku 14 C-förmig ausgestaltet ist, sodass er in einem Bereich des Umfangs des Radnabenantriebs 12 angeordnet werden kann.

Die Fig. 6 zeigt den Akku 14 mit ausgeblendeter Gehäusewandung. Hier ist zu erkennen, dass der Akku 14 als Akkupack ausgebildet ist. Der Akku 14 weist mehrere Akkuzellen 42 auf, die bei eingesetztem Akku 14 parallel zur Radachse des Rads, an dem die Radnabenantriebsanordnung angeordnet ist, ausgerichtet sind. Die Akkuzellen 42 sind in einem Akkugehäuse 44 angeordnet. Des Weiteren ist in dem Akku auch ein Batteriemanagementsystem 45 untergebracht.

In der Fig. 7 ist die Radnabenantriebsanordnung 10 gezeigt, wobei an die Schnittstelle 34 des Akkus 14 ein Ladekabel 46 angeschlossen ist, an welches anderenends ein Bediengerät 48 angeschlossen ist. Der Akku 14 kann somit als Powerbank für das Bediengerät 48 verwendet werden, um dieses aufzuladen. Das Bediengerät 48 kann im Betrieb kabellos mit dem Radnabenantrieb 12 verbunden sein, um diesen zu steuern. Die Powerbankfunktion des Akkus 14 kann nur freigeschaltet werden, wenn dieser in der ersten Aufnahme 20 angeordnet ist. Zum lenken des Rollstuhls weist das Bediengerät 48 einen Joystick auf.

## Patentansprüche

1. Radnabenantriebsanordnung (10) für ein Rad (1), insbesondere ein Rollstuhlrad, mit einem Radnabenantrieb (12) und einem dem Radnabenantrieb (12) zugeordneten Akku (14), der zumindest teilweise umfangsmäßig um den Radnabenantrieb (12) angeordnet ist, wobei eine erste Aufnahme (20) zur Aufnahme des Akkus (14) vorgesehen ist, wobei im Bereich der ersten Aufnahme (20) eine Schnittstelle (24) zur zumindest elektrischen Verbindung des Akkus (14) mit dem Radnabenantrieb (12) vorgesehen ist und wobei eine zweite Aufnahme (22) zur wahlweisen Aufnahme eines Akkus (14), eines Platzhalters (16) oder eines Staufachs vorgesehen ist, **dadurch gekennzeichnet, dass** die zweite Aufnahme (22) ohne Schnittstelle ausgebildet ist.

2. Radnabenantriebsanordnung nach Anspruch 1, **dadurch gekennzeichnet, dass** der Akku (14) entnehmbar ist.

3. Radnabenantriebsanordnung nach einem der vorhergehenden Ansprüche, **dadurch gekennzeichnet, dass** der Akku (14) C-förmig ausgebildet ist.

4. Radnabenantriebsanordnung nach einem der vorhergehenden Ansprüche, **dadurch gekennzeichnet, dass** der Akku (14) als Akkupack mit mehreren Akkuzellen (42) ausgebildet ist, wobei die Akkuzellen (42) in einem Akkugehäuse (44) parallel zur Radachse ausgerichtet sind.

5. Radnabenantriebsanordnung nach einem der vorhergehenden Ansprüche, **dadurch gekennzeichnet, dass** am oder im Akku (14) ein Batteriemanagementsystem (45) angeordnet ist, das über die oder eine weitere Schnittstelle mit dem Radnabenantrieb (12) kommuniziert.

6. Radnabenantriebsanordnung nach einem der vorhergehenden Ansprüche, **dadurch gekennzeichnet, dass** an dem Akku (14) eine Ladeschnittstelle (34) zum Laden eines Bediengeräts (48) eines Fahrzeugs, an dem die Radnabenantriebsanordnung (10) anordenbar ist, vorgesehen ist.

7. Radnabenantriebsanordnung nach einem der vorhergehenden Ansprüche, **dadurch gekennzeichnet, dass** der Akku (14) eine Kühleinrichtung aufweist.

8. Radnabenantriebsanordnung nach einem der vorhergehenden Ansprüche, **dadurch gekennzeichnet, dass** ein den Radnabenantrieb (12) umgebendes Gehäuse (18) oder Gehäuseabschnitt vorgesehen ist, das oder der Verstärkungen (32) aufweist.

9. Radnabenantriebsanordnung nach einem der vorhergehenden Ansprüche, **dadurch gekennzeichnet, dass** die erste Aufnahme (20) und der Akku korrespondierende Führungselemente (26) aufweisen.

10. Rad, insbesondere Rollstuhlrad, mit einer Radnabenantriebsanordnung (10) nach einem der vorhergehenden Ansprüche.

11. Rollstuhl mit einem Rad nach Anspruch 10, wobei ein Bediengerät (48) vorgesehen ist, das kabellos mit dem Radnabenantrieb (12) kommuniziert.

12. Rollstuhl nach Anspruch 11, **dadurch gekennzeichnet, dass** der Rollstuhl als Selbstfahrerrollstuhl ausgebildet ist und das Bediengerät (48) eine Lenkeinrichtung zum Lenken des Rollstuhls aufweist.

## Claims

1. Wheel hub drive assembly (10) for a wheel (1), in particular a wheelchair wheel, comprising a wheel hub drive (12) and a battery (14) associated with the wheel hub drive (12), which is arranged at least partially circumferentially around the wheel hub drive (12), wherein a first receptacle (20) is provided for receiving the battery (14), wherein an interface (24) is provided in the region of the first receptacle (20) for at least the electrical connection of the battery (14) to the wheel hub drive (12), and wherein a second receptacle (22) is provided for accommodating either a battery (14), a placeholder (16) or a storage compartment, **characterised in that** the second receptacle (22) is designed without an interface.

2. A wheel hub drive assembly according to claim 1, **characterised in that** the battery (14) is removable.

3. A wheel hub drive assembly according to one of the preceding claims, **characterised in that** the battery (14) is C-shaped.

4. A wheel hub drive assembly according to one of the preceding claims, **characterised in that** the battery (14) is configured as a battery pack comprising a plurality of battery cells (42), wherein the battery cells (42) are arranged in a battery housing (44) parallel to the wheel axle.

5. A wheel hub drive assembly according to one of the preceding claims, **characterised in that** a battery management system (45) is arranged on or within the battery (14), which communicates with the wheel hub drive (12) via the interface or a further interface.

6. A wheel hub drive assembly according to one of the preceding claims, **characterised in that** a charging interface (34) is provided on the battery (14) for charging a control unit (48) of a vehicle on which the wheel hub drive assembly (10) can be mounted.

7. A wheel hub drive assembly according to one of the preceding claims, **characterised in that** the battery (14) comprises a cooling device.

8. A wheel hub drive assembly according to one of the preceding claims, **characterised in that** a housing (18) or housing section surrounding the wheel hub drive (12) is provided, which comprises reinforcements (32).

9. A wheel hub drive assembly according to one of the preceding claims, **characterised in that** the first receptacle (20) and the battery have corresponding guide elements (26).

10. A wheel, in particular a wheelchair wheel, comprising a wheel hub drive assembly (10) according to one of the preceding claims.

11. A wheelchair comprising a wheel according to claim 10, wherein a control unit (48) is provided which communicates wirelessly with the wheel hub drive (12).

12. A wheelchair according to claim 11, **characterised in that** the wheelchair is designed as a self-propelled wheelchair and the control device (48) comprises a steering mechanism for steering the wheelchair.

## Revendications

1. Dispositif d'entraînement de moyeu de roue (10) pour une roue (1), en particulier une roue de fauteuil roulant, comprenant un entraînement de moyeu de roue (12) et une batterie (14) associée à l'entraînement de moyeu de roue (12), laquelle est disposée au moins partiellement sur la circonférence autour de l'entraînement de moyeu de roue (12), un premier logement (20) étant prévu pour recevoir la batterie (14), une interface (24) est prévue pour la connexion, au moins électrique, de la batterie (14) avec l'entraînement de moyeu de roue (12) et dans lequel un deuxième logement (22) est prévu pour recevoir au choix une batterie (14), un espaceur (16) ou un compartiment de rangement, **caractérisé en ce que** le deuxième logement (22) est réalisé sans interface.

2. Dispositif d'entraînement par moyeu de roue selon la revendication 1, **caractérisé en ce que** la batterie (14) est amovible.

3. Dispositif d'entraînement par moyeu de roue selon l'une des revendications précédentes, **caractérisé en ce que** la batterie (14) a une forme en C.

4. Dispositif d'entraînement de moyeu de roue selon l'une des revendications précédentes, **caractérisé en ce que** la batterie (14) est conçue sous la forme d'un bloc-batterie comportant plusieurs cellules de batterie (42), les cellules de batterie (42) étant disposées dans un boîtier de batterie (44) parallèlement à l'axe de la roue.

5. Dispositif d'entraînement de moyeu de roue selon l'une des revendications précédentes, **caractérisé en ce qu'**un système de gestion de batterie (45) est disposé sur ou dans la batterie (14), lequel communique avec l'entraînement de moyeu de roue (12) via la ou une autre interface.

6. Dispositif d'entraînement de moyeu de roue selon l'une des revendications précédentes, **caractérisé en ce qu'**une interface de charge (34) est prévue sur la batterie (14) pour charger un appareil de commande (48) d'un véhicule sur lequel le dispositif d'entraînement de moyeu de roue (10) peut être monté.

7. Dispositif d'entraînement de moyeu de roue selon l'une des revendications précédentes, **caractérisé en ce que** la batterie (14) comporte un dispositif de refroidissement.

8. Dispositif d'entraînement de moyeu de roue selon l'une des revendications précédentes, **caractérisé en ce qu'**il est prévu un boîtier (18) ou une partie de boîtier entourant l'entraînement de moyeu de roue (12), qui comporte des renforts (32).

9. Dispositif d'entraînement de moyeu de roue selon l'une des revendications précédentes, **caractérisé en ce que** le premier logement (20) et la batterie comportent des éléments de guidage (26) correspondants.

10. Roue, en particulier roue de fauteuil roulant, comportant un dispositif d'entraînement de moyeu de roue (10) selon l'une des revendications précédentes.

11. Fauteuil roulant comportant une roue selon la revendication 10, dans lequel est prévu un dispositif de commande (48) qui communique sans fil avec l'entraînement de moyeu de roue (12).

12. Fauteuil roulant selon la revendication 11, **caractérisé en ce que** le fauteuil roulant est conçu comme un fauteuil roulant actif et **en ce que** le dispositif de commande (48) comporte un dispositif de direction permettant de diriger le fauteuil roulant.
